# FASCICULE DE BREVET EUROPEEN

(11) **EP 0 516 535 B1**
(45) Date de publication et mention de la délivrance du brevet: **06.09.1995**
(21) Numéro de dépôt: 92401446.7
(22) Date de dépôt: 26.05.1992
(51) Int. Cl.: H01M 2/26

(54) **Procédé de liaison d'une connexion métallique sur une électrode à support de type mousse pour générateur électrochimique et électrode obtenue par ce procédé**
Verfahren zum Verbinden eines metallischen Ableiters an eine ein Schaumgerüst als Trägerteil enthaltende Elektrode für einen elektrochemischen Generator und bei diesem Verfahren erhaltene Elektrode
Method for joining a metallic collector to an electrode comprising a spongeous supporting structure for electrochemical generator and electrode obtained thereby

(30) Priorité: 28.05.1991 FR 9106418
(43) Date de publication de la demande: 02.12.1992
(73) Titulaire: SAFT, F-93230 Romainville (FR)
(72) Inventeur: Grange-Cossou, Michel, F-33110 Le Bouscat (FR); Guerinault, Jean-Marc, F-33850 Leognan (FR); Carteau, Bernard, F-33130 Begles (FR); Brunarie, Joel, F-33200 Bordeaux (FR)
(74) Mandataire: Weinmiller, Jürgen

(56) Documents cités:
- EP-A- 0 418 774
- EP-A- 0 454 419
- DE-C- 3 734 131
- GB-A- 2 055 899
- PATENT ABSTRACTS OF JAPAN vol. 12, no. 108 (E-597)(2955) 7 Avril 1988 & JP-A-62 237 665 (YUASA BATTERY CO LTD) 17 Octobre 1987
- PATENT ABSTRACTS OF JAPAN vol. 12, no. 80 (E-590)(2927) 12 Mars 1988 & JP-A-62 219 462 (YUASA BATTERY CO LTD) 26 Septembre 1987
- PATENT ABSTRACTS OF JAPAN vol. 10, no. 8 (E-373)(2065) 14 Janvier 1986 & JP-A-60 172 177 (SANYO DENKI K.K.) 5 Septembre 1985
- PATENT ABSTRACTS OF JAPAN vol. 4, no. 44 (E-5)(526) & JP-A-60 55 014 685)MATSUSHITA DENKI SANGYO K.K.) 1 Février 1980
- PATENT ABSTRACTS OF JAPAN vol. 11, no. 367 (E-561)(2814) 28 Novembre 1987 & JP-A-62 139 251 (MATSUSHITA ELECTRIC IND CO LTD) 22 Juin 1987

## Description

La présente invention concerne un procédé de liaison d'une connexion métallique sur une électrode à support de type mousse pour générateur électrochimique.

Elle se rapporte notamment aux générateurs électrochimiques à électrolyte alcalin dont au moins une électrode comporte un support poreux métallique chargé de matière active. Ce support poreux présente une structure matricielle comparable à une éponge dont les cellules sont connectées les unes aux autres dans un réseau tridimensionnel ; il est désigné ici par le terme mousse.

Avant chargement par la matière active, la porosité de la mousse est supérieure à 90%. Après chargement, l'électrode est comprimée de façon à ce que son épaisseur soit ajustée, ce qui facilite son assemblage et assure le bon fonctionnement du générateur.

Les générateurs concernés peuvent comporter des électrodes planes, ou enroulées en spirale.

La liaison d'une telle électrode à une borne du générateur implique la mise en oeuvre d'une connexion métallique rapportée.

Pour réaliser une telle opération, la transposition des technologies bien connues pour les autres types d'électrodes conduirait à l'une des quatre méthodes suivantes :
- La soudure d'une pièce métallique, ou d'une connexion en mousse non chargée, sur la mousse du support généralement non chargée de matière active dans la zone de soudure.
- La découpe de la mousse du support éventuellement chargée de matière active, de manière à faire apparaître une connexion.
- Le rivetage ou l'agrafage d'une pièce métallique sur la mousse du support chargée de matière active.
- La compression d'une connexion en mousse non chargée sur la mousse du support chargée de matière active.

La première méthode présente l'inconvénient de la fiabilité moyenne de la soudure de composants de faible épaisseur. La préparation de la surface à souder de l'électrode nécessite souvent une opération supplémentaire.

La seconde méthode conduit à réaliser un composant fragile dont la rupture est fréquente dans les opérations successives qui lui sont imposées. De plus la découpe de la connexion dans la mousse pénalise le coût : perte de mousse et éventuellement de matière active à valeur importante.

La troisième méthode par rivetage ou agrafage rigidifie le support ; il en résulte notamment une réduction de l'aptitude à la flexion pour le spiralage de l'électrode.

La connexion en mousse obtenue par la quatrième méthode est onéreuse et fragile.

Ces différentes méthodes présentent en outre l'inconvénient de diminuer la surface active des électrodes.

La présente invention a pour but de mettre en oeuvre un procédé de liaison n'impliquant pas de phase opératoire supplémentaire, et n'entraînant qu'une réduction négligeable de la surface active de l'électrode.

La présente invention a pour objet un procédé de liaison d'une connexion métallique sur une électrode à support de type mousse pour générateur électrochimique, selon lequel on part dudit support présentant une porosité supérieure à 90%, on le charge de matière active et on le comprime pour ajuster son épaisseur, caractérisé par le fait que l'on met en oeuvre une connexion en métal déployé ou en feuillard perforé avec un taux de jour supérieur à 40%, comprenant deux branches solidarisées l'une à l'autre et disposées de part et d'autre dudit support chargé de matière active, et que l'on utilise l'opération de compression du support pour faire pénétrer ladite connexion dans ce support.

Les structures poreuses tridimensionnelles dudit support et de ladite connexion s'interpénètrent et se lient au cours de la compression. On obtient alors une tenue mécanique à l'arrachement optimale.

Selon un premier mode de réalisation ladite connexion définit une languette émergeant dudit support.

Selon un second mode de réalisation ladite connexion est réalisée suivant toute une tranche dudit support. On obtient ainsi une électrode avec une rive métallique pouvant être soudée sur tranche et devenant interchangeable sur une chaîne de fabrication avec des électrodes de l'art antérieur.

De préférence ledit métal déployé présente une maille avec des brins dont la largeur 1 varie entre une demie et trois fois l'épaisseur e.

Le grammage dudit support peut être compris entre 3g/dm² et 7g/dm² .

Ladite connexion est liée audit support suivant une surface comprise entre 0,1% et 60% de la surface de ce support.

Le matériau dudit support est de préférence du nickel et celui de ladite connexion est choisi parmi le nickel, l'acier nickelé, l'acier inoxydable.

La présente invention a également pour objet une électrode pour générateur électrochimique, caractérisée par le fait qu'elle incorpore une connexion électrique en métal déployé ou en feuillard perforé avec un taux de jour supérieur à 40%, les structures poreuses tridimensionnelles dudit support et de ladite connexion s'étant interpénétrées et liées par compression.

Les avantages de la présente invention sont essentiellement les suivants :
- La réduction négligeable de la surface active de l'électrode car la matière active de l'électrode peut fonctionner au niveau de la connexion.
- La simplicité de la forme géométrique de la connexion, et de sa mise en place au cours de la compression du support, sans phase opératoire supplémentaire.
- La possibilité de réaliser des électrodes soudables sur tranche, ce qui permet d'obtenir des électrodes dont les caractéristiques de puissance soient supérieures à celles des électrodes à connexion dite "à languette", et qui soient interchangeables avec les électrodes de l'art antérieur à support classique.

D'autres caractéristiques et avantages de la présente invention apparaîtront au cours de la description suivante de modes de réalisation donnés à titre illustratif mais nullement limitatif.

Dans le dessin annexé :
- les figures 1A à 1D montrent très schématiquement en perspective divers types de connexions destinées à être associées à un support de type mousse, avant l'opération de compression, pour la réalisation d'une électrode dite "à languette",
- les figures 2A à 2D montrent les connexions et le support des figures 1A à 1D après l'opération de compression,
- les figures 3A à 3D correspondent à des coupes selon les lignes IIIA à IIID des figures 2A à 2D,
- la figure 4 montre schématiquement en perspective une électrode positive à languette pour générateur électrochimique prismatique,
- la figure 5 montre schématiquement en perspective une électrode avec une connexion soudée sur tranche selon l'invention,
- la figure 6 montre schématiquement à l'échelle agrandie un exemple de métal déployé pour la réalisation d'une connexion selon l'invention.

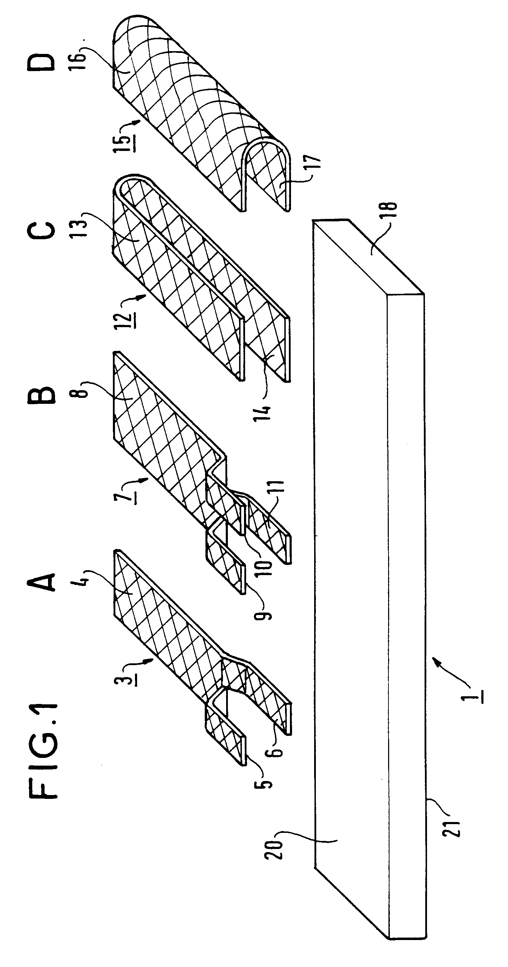

On voit dans les figures 1A à 1D un support 1 en mousse de nickel présentant un grammage de 3,5g/dm², une épaisseur de 1,6 mm, et chargé de matière active à base d'hydroxyde de nickel.

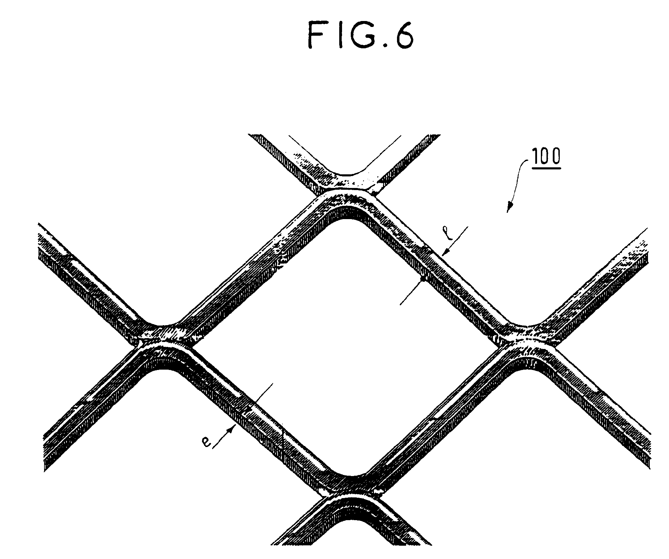

On utilise pour la connexion un métal déployé 100 visible dans la figure 6, en nickel pur, ou en acier nickelé, et dont la maille carrée de diagonale 1,45 mm est définie par des brins d'épaisseur e de l'ordre de 0,1 mm et de largeur 1 de l'ordre de 0,17 mm. On découpe dans ce métal déployé et on met en forme des connexions référencées respectivement 3, 7, 12, 15 dans les figures 1A à 1D.

La connexion 3 comporte une partie plane 4 suivie de deux branches 5 et 6, destinées à s'appliquer respectivement sur les faces 20 et 21 du support 1.

La connexion 7 comprend une partie plane 8 suivie de deux branches 9 et 10 venant s'appliquer sur la face 20 et d'une branche 11 venant s'appliquer sur la face 21.

La connexion 12 a la forme d'un U à deux branches 13 et 14 plus longues que larges, tandis que la connexion 15 a la forme d'un U à deux branches 16 et 17 plus larges que longues, pour une application au niveau de la tranche 18 du support 1.

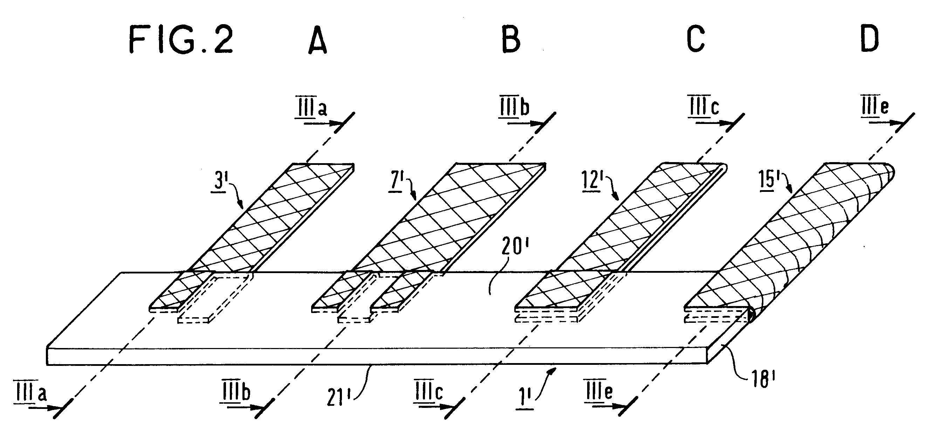

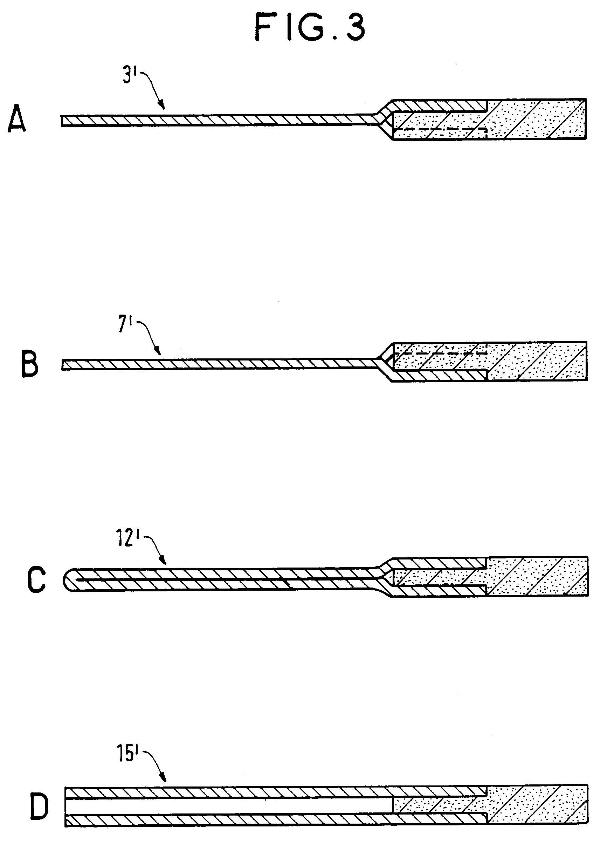

Après mise en place et compression simultanée, le support et la connexion associée sont référencés dans les figures 2A à 2D et 3A à 3D respectivement 1′, 3′, 7′, 12′ et 15′.

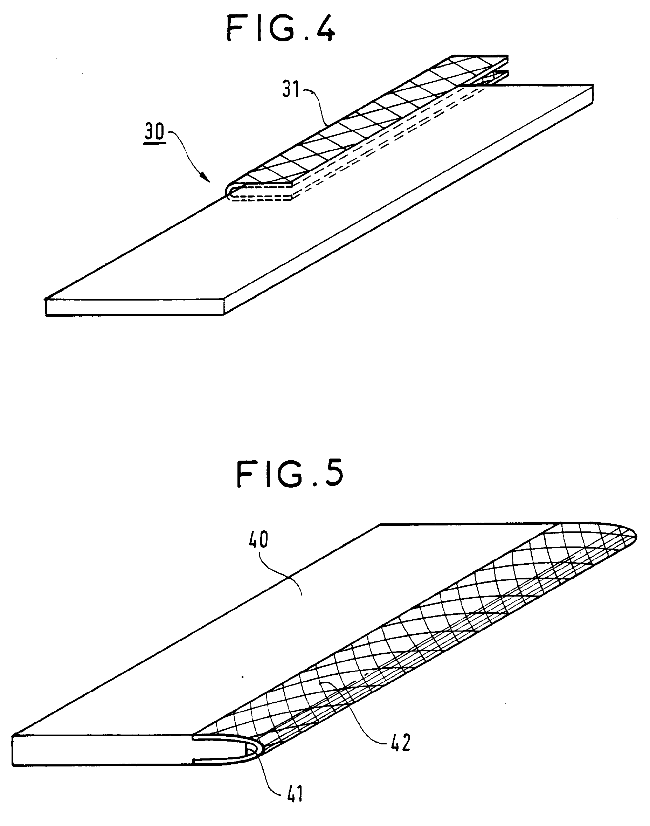

On retrouve dans la figure 4 une électrode de type à languette avec son support 30 et sa connexion 31 correspondant à la variante des figures 1D, 2D, 3D. La largeur du support est de 14 mm et sa hauteur est de 34 mm. Il est chargé de 15g/dm² de matière active à base d'hydroxyde de nickel. Après compression, l'épaisseur du support 30 initialement de 1,6 mm est de 0,5 mm.

Des électrodes ainsi réalisées peuvent être assemblées par les technologies classiques relatives aux générateurs électrochimiques prismatiques.

Selon un autre mode de réalisation le support 30 a été chargé, non d'hydroxyde de nickel, mais d'alliage métallique hydrurable au taux de 17g/dm².

Dans la variante de la figure 5 on applique le procédé selon l'invention, de manière analogue à la variante des figures 1D, 2D, 3D, pour réaliser une connexion 42 sur toute la tranche 41 d'un support 40. Ce support, sa matière active ainsi que le métal déployé utilisés, sont analogues à ceux de la figure 1. Sa longueur est de 130 mm et sa largeur est de 30 mm. Il est chargé de matière active au taux de 17g/dm². L'électrode ainsi équipée de sa connexion peut être spiralée en face d'une électrode négative à base de cadmium avec un séparateur interposé. Elle peut être raccordée par soudure électrique à une connexion classique, elle-même raccordée de manière connue au couvercle du générateur électrochimique.

Bien entendu, l'invention n'est pas limitée aux modes de réalisation qui viennent d'être décrits, notamment au niveau des caractéristiques du support en mousse, de celles de la matière active dont il est chargé, des dimensions et du matériau du métal déployé. par ailleurs le métal déployé peut être remplacé par un feuillard métallique perforé dont le taux de jour est supérieur à 40%.

## Revendications

1. Procédé de liaison d'une connexion métallique sur une électrode à support de type mousse pour générateur électrochimique, selon lequel on part dudit support présentant une porosité supérieure à 90 %, on le charge de matière active et on le comprime pour ajuster son épaisseur, caractérisé par le fait que l'on met en oeuvre une connexion (3) en métal déployé (100) ou en feuillard perforé avec un taux de jour supérieur à 40 %, comprenant deux branches (5 et 6) solidarisées l'une à l'autre et disposées de part et d'autre dudit support (1) chargé de matière active, et que l'on utilise l'opération de compression du support pour faire pénétrer ladite connexion dans ce support.

2. Procédé de liaison selon la revendication 1, caractérisé par le fait que ladite connexion (3) définit une languette (4) émergeant de ladite électrode.

3. Procédé de liaison selon la revendication 1, caractérisé par le fait que ladite connexion (15) est réalisée suivant toute une tranche (18) dudit support (1).

4. Procédé de liaison selon l'une des revendications précédentes, caractérisé par le fait que ledit métal déployé (100) présente une maille avec des brins dont la largeur 1 varie entre une demie et trois fois l'épaisseur e.

5. Procédé de liaison selon l'une des revendications précédentes, caractérisé par le fait que le grammage dudit support est compris entre 3g/dm² et 7g/dm².

6. Procédé de liaison selon l'une des revendications précédentes, caractérisé par le fait que ladite connexion est liée audit support suivant une surface comprise entre 0,1 % et 60 % de la surface de ce support.

7. Procédé de liaison selon l'une des revendications précédentes, caractérisé par le fait que le matériau dudit support est du nickel et que celui de ladite connexion est choisi parmi le nickel, l'acier nickelé, l'acier inoxydable.

8. Electrode pour générateur électrochimique obtenue par le procédé selon l'une des revendications 1 à 7, caractérisée par le fait qu'elle incorpore une connexion électrique en métal déployé ou en feuillard perforé avec un taux de jour supérieur à 40 %, les structures poreuses tridimensionnelles dudit support et de ladite connexion s'étant interpénétrées et liées par compression.

## Patentansprüche

1. Verfahren zum Verbinden eines metallischen Anschlusses mit einer Elektrode in Form eines Schaumstoffträgers für elektrochemische Generatoren, wobei man von dem Träger ausgeht, der eine größere Porosität als 90% besitzt und mit einem aktiven Material versehen ist, worauf eine Kompression erfolgt, um eine bestimmte Dicke zu erhalten, dadurch gekennzeichnet, daß man einen Anschluß (3) aus Streckmetall (100) oder aus perforiertem Metallblech mit einer Lochrate von über 40% herstellt, der zwei Schenkel (5 und 6) aufweist, die aneinander befestigt und zu beiden Seiten des mit aktivem Material versehenen Trägers (1) angeordnet sind, und daß man die Kompressionsoperation des Trägers benutzt, um den Anschluß in den Träger eindringen zu lassen.

2. Verbindungsverfahren nach Anspruch 1, dadurch gekennzeichnet, daß der Anschluß (3) eine Zunge (4) definiert, die über die Elektrode hinausragt.

3. Verbindungsverfahren nach Anspruch 1, dadurch gekennzeichnet, daß sich der Anschluß (15) über eine gesamte Kante (18) des Trägers (1) erstreckt.

4. Verbindungsverfahren nach einem der vorhergehenden Ansprüche, dadurch gekennzeichnet, daß das Streckmetall (100) Maschen mit Rippen aufweist, deren Breite l zwischen der halben und der dreifachen Dicke e gewählt ist.

5. Verbindungsverfahren nach einem der vorhergehenden Ansprüche, dadurch gekennzeichnet, daß das Flächengewicht des Trägers zwischen 3g/dm² und 7 g/dm² liegt.

6. Verbindungsverfahren nach einem der vorhergehenden Ansprüche, dadurch gekennzeichnet, daß der Anschluß mit dem Träger über eine Oberfläche verbunden ist, die zwischen 0,1% und 60% der Oberfläche des Trägers ausmacht.

7. Verbindungsverfahren nach einem der vorhergehenden Ansprüche, dadurch gekennzeichnet, daß das Material des Trägers Nickel ist und daß das Material des Anschlusses unter den Metallen Nickel, vernickelter Stahl und rostfreier Stahl gewählt ist.

8. Nach dem Verfahren gemäß einem der Ansprüche 1 bis 7 hergestellte Elektrode für elektrochemische Generatoren, dadurch gekennzeichnet, daß die Elektrode einen elektrischen Anschluß aus Streckmetall oder aus perforiertem Metallblech mit einer Lochrate über 40% enthält, wobei die dreidimensionalen porösen Strukturen des Trägers und der Anschluß sich aufgrund einer Kompression gegenseitig durchdrungen und verbunden haben.

## Claims

1. A joining method for joining a metal connection tab to an electrochemical cell electrode having a foam-type support, wherein starting from said support having a porosity of greater than 90%, the support is filled with active material and is compressed to adjust its thickness, the method being characterized by the fact that a connection tab (3) is used, the tab being made of expanded metal (100) or of perforated metal foil having perforations occupying more than 40% of its surface area, the tab including two branches (5 and 6) that are fixed to each other and that are disposed on opposite sides of said support (1) filled with active material, and in that the support compression operation is used to cause said connection tab to penetrate into the support.

2. A joining method according to claim 1, characterized by the fact that said connection tab (3) defines a tongue (4) projecting from said electrode.

3. A joining method according to claim 1, characterized by the fact that said connection tab (15) is made along an entire edge (18) of said support (1).

4. A joining method according to any preceding claim, characterized by the fact that said expanded metal (100) has a mesh made up of strands of width *l* lying in the range one-half to three times its thickness e.

5. A joining method according to any preceding claim, characterized by the fact that the weight per unit area of said support lies in the range 3 g/dm² to 7 g/dm².

6. A joining method according to any preceding claim, characterized by the fact that said connection tab is bonded to said support over a surface lying in the range 0.1% to 60% of the surface area of the support.

7. A joining method according to any preceding claim, characterized by the fact that the material of said support is nickel and the material of said connection tab is selected from: nickel, nickel-plated steel, and stainless steel.

8. An electrochemical cell electrode obtained by the method of any one of claims 1 to 7, characterized by the fact that it incorporates an electrical connection tab made of expanded metal or of perforated metal foil having perforations occupying more than 40% of its surface area, the three-dimensional porous structures of said support and of said connection tab being caused to interpenetrate and bind together by compression.
